(19)

Europäisches Patentamt
European Patent Office
Office européen des brevets

(11) **EP 3 671 310 A1**

(12) **EUROPEAN PATENT APPLICATION**

(43) Date of publication:
**24.06.2020 Bulletin 2020/26**

(51) Int Cl.:
***G02B 21/32*** (2006.01)   ***G02B 6/32*** (2006.01)

(21) Application number: **18213584.8**

(22) Date of filing: **18.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Thomson Licensing**
**35576 Cesson Sévigné Cédex (FR)**

(72) Inventors:
• **BLONDE, Laurent**
  **35576 Cesson-Se vigne  Cedex (FR)**

• **Drazic, Valter**
  **35576 Cesson-Se vigne  Cedex (FR)**
• **SHRAMKOVA, Oksana**
  **35576 Cesson-Se vigne  Cedex (FR)**
• **DAMGHANIAN, Mitra**
  **35576 Cesson-Se vigne  Cedex (FR)**

(74) Representative: **Vidon Brevets & Stratégie**
**16B, rue de Jouanet**
**BP 90333**
**35703 Rennes Cedex 7 (FR)**

(54) **OPTICAL MANIPULATION APPARATUS FOR TRAPPING OR MOVING MICRO OR NANOPARTICLES**

(57)     An optical manipulation apparatus for trapping or moving micro or nanoparticles is proposed. Such apparatus comprises a device comprising:
- a first (101) and a second (102) part having respectively a second $n_2$ and third $n_3$ refractive index and a first $W_1$ and second $W_2$;
- a first contact area (100e1) intended to be between a host medium having a first refractive index $n_1$ and in which the micro or nanoparticles are intended to be trapped or moved by a focused electromagnetic beam radiated by the device;
- a second contact area (100e2) between the first part and the second part; and
- a third contact area (100e3) intended to be between the second part and the host medium.

The focused electromagnetic beam results from a combination of at least two beams among a first (NJ1), a second (NJ2) and a third (NJ3) jet beams radiated respectively by the first, second and third contact areas when an incoming electromagnetic wave (IEM) illuminates the device. The device is configured for having a direction of propagation of the focused electromagnetic beam tilted in respect of a direction of propagation of the incoming electromagnetic wave as a function of the first $n_1$, second $n_2$ and third $n_3$ refractive indexes; of the first $W_1$ and second $W_2$ widths; and of the first H1 and second H2 heights of the first and second parts.

**Figure 1**

EP 3 671 310 A1

**Description**

## 1. FIELD OF THE DISCLOSURE

The present disclosure relates to the field of optics and photonics, and more specifically to an optical manipulation device for trapping or moving micro or nanoparticles.

The disclosure can be of interest in any field where neutral particles have to be trapped and/or manipulated as for instance in atomic physic, nonlinear physics, biology and medicine, etc.

## 2. TECHNOLOGICAL BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It is widely known that the main features of photonic condensed optical beams, or photonic "nanojets", are the generation of a transverse beam width smaller than the diffraction limit and propagation over several wavelengths without significant divergence. The structured field of nanojets may induce specific optical forces providing the possibility for micro or nanoparticles manipulation along the nanojet EM (for "ElectroMagnetic") field trajectories.

Since optical manipulation devices (like optical tweezers) are a powerful non-invasive tool in biological and medical application, the study of micro or nanoparticles manipulation based on the nanojet has stimulated researchers' interest. However, the previous works regarding nanojet-induced optical forces focused on trapping particles along an axis of symmetry of the device used to generate the nanojet.

Recently, the asymmetric dielectric system creating a curved photonic jet ("photonic hook") was introduced to generate the optical forces for moving particles in a curved trajectory as disclosed for instance in the article by A. S. Ang, A. Karabchevsky, I. V. Minin, O. V. Minin, S. V. Sukhov and A. S. Shalin: "'Photonic Hook' based optomechanical nanoparticle manipulator", Scient. Rep., 2018. It was demonstrated that a particle could go around a glass obstacle or be stably trapped near glass and gold obstacles, which allows new applications in optical manipulation of micro- or nano-particles.

There is thus a need for a new type of optical manipulation device providing more flexible nanoparticle manipulation, in particular through the generation of curved jet beams.

## 3. SUMMARY

A particular aspect of the present disclosure relates to an optical manipulation apparatus (e.g. an optical tweezer) for trapping or moving micro or nanoparticles. Such optical manipulation apparatus comprises a device intended to be in contact with a dielectric host medium having a first refractive index $n_1$ and in which the micro- or nano-particles are trapped or moved by a focused electromagnetic beam radiated by the device when an incoming electromagnetic wave illuminates at least one face of the device, named illumination face. Such device comprises at least:

- a first part of a first material having a second refractive index $n_2$ and having a first width $W_1$ along a direction of extension of the illumination face, named X-axis; and
- a second part of a second material having a third refractive index $n_3$, with n1<n3<n2, and having a second width $W_2$ along the X-axis.

The first and second parts are located side by side along the X-axis with $W_1 + W_2$ greater than an equivalent wavelength in vacuum, named $\lambda$, of the incoming electromagnetic wave, each of the first and second parts extending along a direction orthogonal to the illumination face, named Z-axis, from the illumination face up to another face of the device, named radiating face, opposite to the illumination face, the first and second parts having respectively a first height H1 and a second height H2 along the Z-axis fulfilling $|H2 - H1| \leq \lambda/4$. The device further comprises:

- a first contact area intended to be between the host medium and the first part, the first contact area contributing to the radiation of a first jet beam in a near field zone when the incoming electromagnetic wave illuminates at least the illumination face;
- a second contact area between the first part and the second part, the second contact area contributing to the radiation of a second jet beam in the near field zone when the incoming electromagnetic wave illuminates at least the illumination face; and

- a third contact area intended to be between the second part and the host medium, the third contact area contributing to the radiation of a third jet beam in the near field zone when the incoming electromagnetic wave illuminates at least the illumination face.

The focused electromagnetic beam results from a combination of at least two beams among the first, second and third jet beams, the device being configured for having a direction of propagation of the focused electromagnetic beam being tilted in respect of a direction of propagation of the incoming electromagnetic wave as a function of at least part of:

- the first $n_1$, second $n_2$ and third $n_3$ refractive indexes;
- the first $W_1$ and second $W_2$ widths; and
- the first H1 and second H2 heights.

Thus, the present disclosure proposes a new and inventive solution for trapping or moving micro or nanoparticles.

More particularly, when the device comprised in the claimed optical manipulation apparatus is illuminated by the incoming electromagnetic wave, the resulting focused electromagnetic beam (or resulting jet beam) is generated in a direction that is tilted in respect of the direction of propagation of the incoming electromagnetic wave. In that case, the electromagnetic field lines of the outgoing focused electromagnetic beam present a curvature allowing the micro or nanoparticles to be trapped or moved, even around or behind objects present in the vicinity of the radiating face of the device from which the focused electromagnetic beam comes out of the device. This allows for a more flexible manipulation of the micro- or nano-particles.

According to one embodiment, $n_3 \geq \sqrt{n_1 n_2}$, $W_1 = W_2$ and $H1 \geq H_A$, with $H_A$ a height, along the Z-axis and relative to the illumination face, of the intersection point of the first and second jet beams.

According to one embodiment, $n_3 < \sqrt{n_1 n_2}$ and $W_2 > W_1$.

According to one embodiment, $n_3 < \sqrt{n_1 n_2}$, $W_2 < W_1$ and $H1 \geq H_A$, with $H_A$ the height, along the Z-axis and relative to the illumination face, of an intersection point of the first and second jet beams.

According to one embodiment, $n_3 > \sqrt{n_1 n_2}$, $W_2 < W_1$ and $H1$ is targeted to be equal to $H_A - \lambda/2$, with $H_A$ the height, along the Z-axis and relative to the illumination face, of an intersection point of the first and second jet beams.

According to one embodiment, the height $H_A$ fulfils $H_A = \dfrac{W_1}{\tan \Theta_{B1} + \tan \Theta_{B2}}$, $\Theta_{B1}$ and $\Theta_{B2}$ being respectively radiation tilt angles of the first and second jet beams in respect of the direction of propagation of the incoming electromagnetic wave.

Thus, the device is configured for having the focused electromagnetic beam tilted in respect of the direction of propagation of the incoming electromagnetic wave e.g. when the incoming electromagnetic wave presents a normal incidence relative to the illumination face of the device.

According to one embodiment, $\Theta_{B1}$ and $\Theta_{B2}$ are targeted to be respectively equal to $90° - \dfrac{\Theta_{TIR1} + \alpha_1}{2}$ and to $90° - \dfrac{\Theta_{TIR2} + \alpha_2}{2}$, where angles $\alpha_1$ and $\alpha_2$ are respectively the base angles of the first and second contact areas relative to the X-axis, and where $\Theta_{TIR1}$ and $\Theta_{TIR2}$ are respectively limit angles of refraction associated with the first and third contact areas.

Thus, the device is configured for having the focused electromagnetic beam tilted in respect of the direction of propagation of the incoming electromagnetic wave e.g. when the first and second parts have nonvertical contact areas relative to the illumination face.

According to one embodiment, $\Theta_{TIR1} = \sin^{-1}\left(\dfrac{n_1}{n_2}\right)$ and $\Theta_{TIR2} = \sin^{-1}\left(\dfrac{n_3}{n_2}\right)$.

According to one embodiment, the equivalent wavelength in vacuum, $\lambda$, of the incoming electromagnetic wave belongs to the visible light spectrum. For instance, the equivalent wavelength in vacuum of the incoming electromagnetic wave belongs to the range going from 390nm to 700nm.

According to one embodiment, at least one of the first and second materials belongs to the group comprising:

glass, plastic, a polymer material, oxides and nitrides.

## 4. LIST OF FIGURES

Other features and advantages of embodiments shall appear from the following description, given by way of indicative and non-exhaustive examples and from the appended drawings, of which:

- Figure 1 illustrates the cross-section view, in the XZ-plane, of a device comprising two parts of two different materials according to an embodiment of the present disclosure;
- Figure 2 illustrates the dependence on $n_3$ of the angles of deviation of the jet beams generated by the device of figure 1 when W1=W2;
- Figures 3a and 3b illustrate the power density distribution along the X-axis for the jet beams generated by the device of figure 1 when $\lambda$=550nm, $n_1$=1, $n_2$= 1.8, $W_1$=$W_2$=600nm, and in the cut-plane $Z_0$=550nm with $n_3$= 1.3 (figure 3a); and in the cut-plane $Z_0$=1000nm with $n_3$= 1.6 (figure 3b);
- Figures 4a to 4c illustrate the power density distribution in the XZ-plane for the jet beams generated by the device of figure 1 when $\lambda$=550nm, $n_1$=1, $n_2$= 1.8, $n_3$= 1.6, $W_1$=$W_2$=600nm, and when H1=H2=400nm (figure 4a), H1=H2=600nm (figure 4b), H1=H2=900nm (figure 4c);
- Figure 4d illustrates the schematic distribution of the main jet beams in figure 4c;
- Figures 5a and 5b illustrate respectively the X and Z coordinates of the hot spot position of the jet beams generated by the device of figure 1 when $\lambda$=550nm, n1=1, n2=1.8, W1=W2= 300nm and H1=H2=H for various values of n3 and various values of H;
- Figure 5c illustrates the power density distribution of the hot spot generated by the device of figure 1 when $\lambda$=550nm, n1=1, n2= 1.8, W1=W2= 300nm and H1=H2=H for various values of n3 and various values of H;
- Figures 6a and 6b illustrate the X coordinate of the hot spot position of the jet beams generated by the device of figure 1 as a function of the equivalent wavelength in vacuum, $\lambda$, of the incoming electromagnetic wave when n1=1, n2= 1.8, W1=W2= 600nm and when H1=H2=H, respectively for n3=1.3 (figure 6a) and for n3=1.6 (figure 6b);
- Figures 7a and 7b illustrate respectively the power density distribution in the XZ-plane and the schematic distribution of the jet beams generated by the device of figure 1 when $\lambda$=550nm, $n_1$=1, $n_2$= 1.8, $n_3$= 1.3, $W_1$=600nm, $W_2$=1400nm and H1=H2=400nm;
- Figure 7c illustrates the schematic distribution of the main jet beams of figures 7a and 7b in the cut-plane Zo=1900nm and for different values of $W_2$;
- Figures 8a and 8b illustrate respectively the power density distribution in the XZ-plane and the schematic distribution of the jet beams generated by the device of figure 1 when $\lambda$=550nm, $n_1$=1, $n_2$= 1.8, $n_3$= 1.6, $W_1$=600nm, $W_2$=1400nm and H1=H2=400nm;
- Figure 8c illustrates the power density distribution of the hot spots of the jet beams of figures 8a and 8b as a function of $W_2$;
- Figures 8d and 8e illustrate respectively the X and Z coordinates of the hot spots of the jet beams of figures 8a and 8b as a function of $W_2$;
- Figures 9a and 9b illustrate respectively the power density distribution in the XZ-plane and the schematic distribution of the jet beams generated by the device of figure 1 when $\lambda$=550nm, $n_1$=1, $n_2$= 1.8, $n_3$= 1.6, $W_1$=1400nm, $W_2$=600nm and H1=H2=400nm;
- Figure 9c illustrates the schematic distribution of the jet beams generated by the device of figure 1 when $\lambda$=550nm, $n_1$=1, $n_2$= 1.8, $n_3$= 1.6, $W_1$=1960nm, $W_2$=600nm, H1=H2=400nm;
- Figure 9d illustrates the power density distribution of the hot spots of the jet beams of figures 9a and 9b as a function of $W_1$;
- Figures 10a and 10b illustrate the power density distribution in a XZ-plane of the jet beams generated by the device of figure 1 when $\lambda$=550nm, $n_1$=1, $n_2$= 1.8, $W_1$=1000nm, $W_2$=700nm, H1=H2=900nm, and when $n_3$= 1.3 (figure 10a) or $n_3$=1.6 (figure 10b);
- Figures 11a and 11b illustrate the angle of deviation, relative to the direction of propagation of the incoming electromagnetic wave, of the focused jet beam generated by the device of figure 1 when $\lambda$=550nm, $n_1$=1, $n_2$= 1.8, $n_3$=1.6, $W_1$=1000nm, $W_2$=700nm, H1=H2=900nm, and when $\alpha$=0° (figure 11a) or $\alpha$=10° (figure 11b), with $\alpha$ the angle of incidence of the incoming electromagnetic wave relative to the direction normal to the surface of the illuminated face of the device.
- Figure 12 illustrates the cross-section view, in the XZ-plane, of a device comprising two parts of two different materials according to another embodiment of the present disclosure;
- Figures 13a and 13b illustrate the power density distribution along the X-axis of the jet beams generated by the device of figure 12 when $\lambda$=550nm, $n_1$=1, $n_2$= 1.8, $W_1$=$W_2$=600nm, $\alpha_1$=85°, $\alpha_2$=90°, $\alpha_3$=80°, and in the cut-plane $Z_0$=550nm with $n_3$= 1.3 (figure 13a); and in the cut-plane Zo=1000nm with $n_3$= 1.6 (figure 13b);

- Figures 14a to 14c illustrate the power density distribution in a XZ-plane of the jet beams generated by the device of figure 12 when $\lambda$=550nm, $n_1$=1, $n_2$= 1.8, $n_3$=1.6, $W_1$=$W_2$=600nm, $\alpha_1$=85°, $\alpha_2$=90°, $\alpha_3$=80°, and when H1=H2=400nm (figure 14a), H1=H2=600nm (figure 14b), or H1=H2=900nm (figure 14c);
- Figures 15a and 15b illustrate the specific height $H_A$ as a function of the base angles $\alpha_1$, $\alpha_2$ and $\alpha_3$ of the device of figure 12 when $n_1$=1, $n_2$= 1.8, $n_3$=1.6 and $W_1$=$W_2$=600nm;
- Figures 15c and 15d illustrate the deviation angle $\Theta_{B6}$ as a function of the base angles $\alpha_1$, $\alpha_2$ and $\alpha_3$ of the device of figure 12 when $n_1$=1, $n_2$= 1.8, $n_3$=1.6 and $W_1$=$W_2$=600nm;
- Figure 16 illustrates the power density distribution along the X-axis and in the cut-plane $Z_0$=1000nm of the jet beams generated by the device of figure 12 for different values of the base angle $\alpha_3$ when $\lambda$=550nm, $n_1$=1, $n_2$= 1.8, $n_3$= 1.6, $W_1$=$W_2$=600nm, H1=H2=800nm, $\alpha_1$=85°, $\alpha_2$=90°;
- Figures 17a and 17b illustrate the optical forces generated by a single part material having a refractive index of n=n1=n2=1.6 (figure 17a), and by an optical manipulation apparatus comprising the device of figure 1 when $\lambda$=550nm, $n_1$=1, $n_2$= 1.8, $n_3$= 1.6, $W_1$= $W_2$= 600 nm and when H1=H2=900nm (figure17b).
- Figures 18a and 18b illustrate the optical forces generated by a single part material having a refractive index n in presence of an obstacle when n=1.6 and H=900nm (figure 18a), and when n=1.8 and H=900nm (figure 18b);
- Figures 18c and 18d illustrate the optical forces generated by an optical manipulation apparatus according to the disclosure and in presence of an obstacle when $n_2$=1.8, $n_3$= 1.6 and H1=H2=900nm (figure 18c), and when $n_2$=1.8, $n_3$= 1.6 and H1=H2=600nm (figure 18d);
- Figures 19a and 19b illustrate the optical forces generated by a single part material having a refractive index n in presence of an obstacle when n=1.6 and H=900nm (figure 19a), and when n=1.8 and H=900nm (figure 19b);
- Figures 19c and 19d illustrate the optical forces generated by an optical manipulation apparatus according to the disclosure and in presence of an obstacle when $n_2$=1.8, $n_3$= 1.6 and H1=H2=900nm (figure 19c), and when $n_2$=1.8, $n_3$= 1.6 and H1=H2=600nm (figure 19d).

The components in the figures are not necessarily to scale, emphasis instead being placed upon illustrating the principles of the invention.

## 5. DETAILED DESCRIPTION

In all of the figures of the present document, the same numerical reference signs designate similar elements and steps.

The present disclosure relates to a technique for generating optical forces through jet beams which field lines exhibit curvatures allowing micro or nanoparticles to be trapped or moved e.g. around obstacles. This is achieved through the use of a device comprising two or more parts of dielectric materials with different refractive indexes. The refractive indexes of the constitutive parts are higher than the surrounding host medium in which the micro- or nano-particles are trapped or moved. The constitutive parts are configured in such a way that at least two of the jet beams, originating from different contact areas (associated with different parts) of the device, recombine and contribute to the formation of a focused electromagnetic beam which direction of propagation is deflected in respect of a direction of propagation of an incoming electromagnetic wave illuminating the device.

As a reminder, the generation of jet beams is described in the patent document EP 3 223 063 in the name of the same Applicant. Numerical simulations show that the deflection of the generated focused jet beam can be controlled by the parameters of the device in view of the surrounding host medium.

### 5.1 Topology

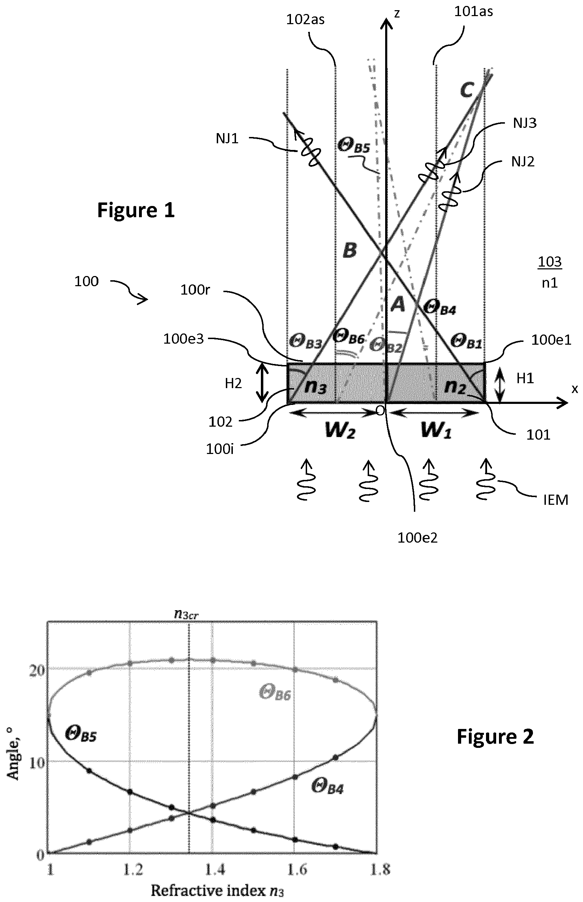

**Figure 1** illustrates the cross-section view, in the XZ-plane, of a device 100 comprising a first part 101 and a second part 102 according to an embodiment of the present disclosure.

The device 100 is intended to be in contact with a dielectric host medium 103 having a first refractive index $n_1$ and in which the micro or nanoparticles are intended to be trapped or moved by a focused electromagnetic beam radiated by the device 100 when an incoming electromagnetic wave IEM illuminates at least one face of the device 100, named illumination face 100i. More particularly:

- the first part 101 is made of a first material having a second refractive index $n_2$. The first part 101 has a first width $W_1$ along the X-axis (the X-axis corresponds in the chosen coordinate system to a direction of extension of the illumination face 100i); and
- the second part is made of a second material having a third refractive index $n_3$, with $n_1$<$n_3$<$n_2$, and having a second width $W_2$ along the X-axis.

For instance, the first and second materials belong to the group comprising glass, plastic, a polymer material, oxides and nitrides.

The first 101 and second 102 parts are located side by side along the X-axis with $W_1 + W_2$ greater than the equivalent wavelength in vacuum, $\lambda$, of the incoming electromagnetic wave IEM. Each of the 101 and second 102 parts extend along the Z-axis (the Z-axis is orthogonal to X-axis and thus to the illumination face 100i in the chosen coordinate system) from the illumination face 100i up to another face of the device 100, named radiating face 100r, opposite to the illumination face 100i. The first 101 and second 102 parts have respectively a first height H1 and a second height H2 along the Z-axis.

In the embodiment of figure 1, H1=H2. However, in other embodiments the first height H1 and the second height H2 can be different. Indeed, simulations show that the technical effects (i.e. having the electromagnetic field lines of the outgoing focused electromagnetic beam presenting a curvature) is achieved as long as we have $|H2 - H1| \leq \lambda/4$. Indeed, as long as this condition is fulfilled, having a difference between the first height H1 and the second height H2 does not lead to the creation of additional jet beams (or secondary lobes) in the focused electromagnetic beam radiated by the device 100.

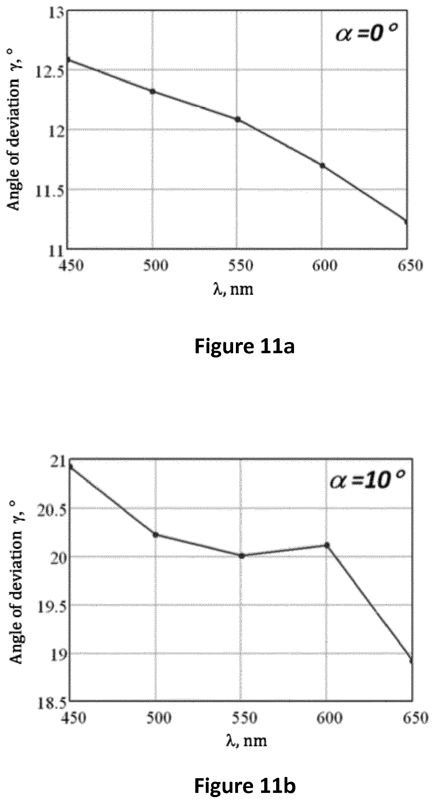

Back to figure 1, the direction of propagation of the incoming electromagnetic wave IEM is orthogonal to the illumination face 100i (i.e. the direction of propagation of the incoming electromagnetic wave IEM is parallel to the Z-axis). However in other embodiments, the direction of propagation of the incoming electromagnetic wave IEM is tilted relative to the Z-axis as discussed below in relation with figures 11a and 11b.

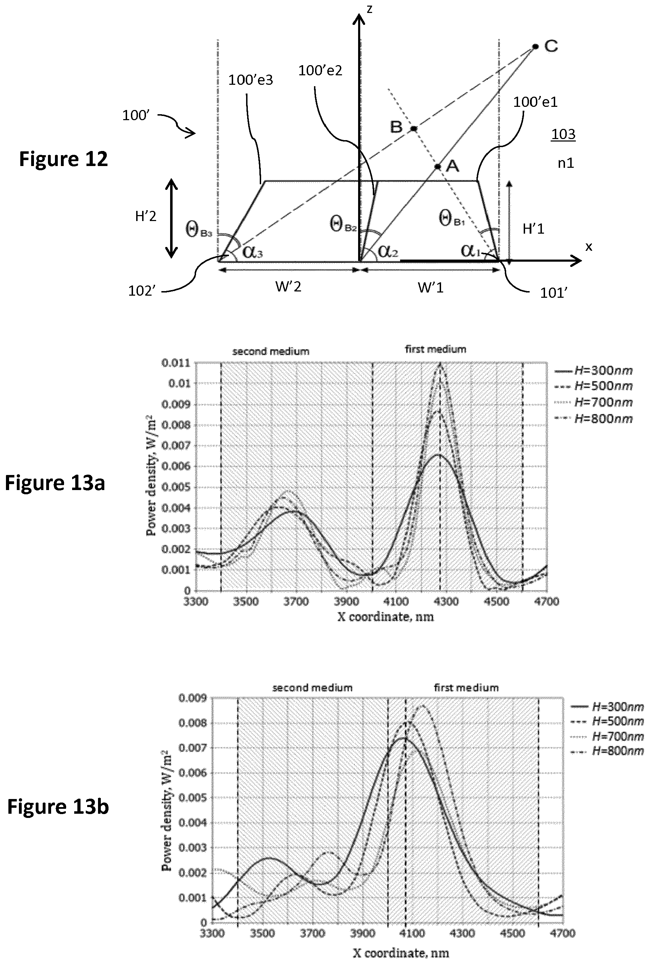

Back to figure 1, the first 101 and second 102 parts have vertical edges parallel to the Z-axis. The radiating 100r and illumination 100i faces are orthogonal to the Z-axis, which corresponds to a base angle of 90°. However, in other embodiments, some prismatic structures (with arbitrary base angles) can also be used for the device 100 as discussed below in relation with figure 12. Variation of the base angle value provides additional degree of freedom in the control of the jet beams radiation.

Back to figure 1, the device 100 thus comprises:

- a first contact area 100e1 intended to be between the host medium 103 and the first part 101 when the device is in contact with the host medium 103. The first contact area 100e1 contributes to the radiation of a first jet beam, NJ1, in a near field zone of the device 1 when the incoming electromagnetic wave IEM illuminates at least the illumination face 100i;
- a second contact area 100e2 between the first part 101 and the second part 102. The second contact area 100e2 contributes to the radiation of a second jet beam, NJ2, in the near field zone of the device 1 when the incoming electromagnetic wave IEM illuminates at least the illumination face 100i; and
- a third contact area 100e3 intended to be between the second part 102 and the host medium 103 when the device 100 is in contact with the host medium 103. The third contact area 100e3 contributes to the radiation of a third jet beam, NJ3, in the near field zone of the device 1 when the incoming electromagnetic wave IEM illuminates at least the illumination face 100i.

More particularly, when the incoming electromagnetic wave IEM presents an oblique angle of incidence (i.e. the angle of incidence of the incoming electromagnetic wave IEM relative to a normal of the illumination face 100i), the incoming electromagnetic wave IEM always illuminates the illumination face 100i, but also at least another lateral face of the device 100. Whatever the considered slant angles of incidence, the first 100e1, second 100e2 and third 100e3 contact areas contribute to the radiation of the first NJ1, second NJ2 and third NJ3 jet beams respectively. Indeed, such jet beams result from the superposition of many contributions resulting from the diffraction or refraction of the incoming electromagnetic wave IEM by the different faces or contact areas (e.g. between parts) of the device 100. Thus, in any case the first 100e1 contact area contributes to the radiation of the first jet beam NJ1, the second 100e2 contact area contributes to the radiation of the second jet beam NJ2 and the third 100e3 contact area contributes to the radiation of the third jet beam NJ3.

Back to figure 1, the three jet beams, NJ1, NJ2 and NJ3 can intersect in different hot spots (a hot spot corresponding to a point of highest EM power in the considered jet), or focused points, which locations are referenced as points A, B and C.

According to the present disclosure, the materials and size of the first 101 and second 102 parts can be optimized in order to manage the position of the jet hot spots, EM power, direction and angle of deviation of the three jet beams NJ1, NJ2 and NJ3. As a result, the device 100 behaves as if it was radiating a focused electromagnetic beam resulting from the combination of at least two beams among said first NJ1, second NJ2 and third NJ3 jet beams. The device 100 can thus be configured for having a direction of propagation of the focused electromagnetic beam being tilted in respect of a direction of propagation of the incoming electromagnetic wave as a function of at least part of:

- the first n1, second n2 and third n3 refractive indexes;

- the first $W_1$ and second $W_2$ widths; and
- the first H1 and second H2 heights.

## 5.2 Design principles & Main performance characteristics

In this Section, we present a set of equations to estimate the optimal combinations of materials and dimensions of the blocks for having a jet beam shift (i.e. having a tilt angle relative to the direction of propagation of the incoming electromagnetic wave) and deviation. As shown below, the hot spot position and direction of beam deviation is sensitive to the sizes of constitutive parts. For devices with dimensions larger than a few wavelengths the Fresnel diffraction phenomenon will have a huge impact.

### 5.2.1 Main characteristics of the generated jet beams

As demonstrated in patent document EP 3 223 063 in the name of the same Applicant, the beam-forming phenomenon appears on a contact area between two materials of different refractive indexes, and is associated with this contact area (e.g. contact area 100e1, 100e2 or 100e3 of the device 100 of figure 1) and the illumination face 100i.
More particularly, the jet beam radiation angle can be derived in relation to the Snell's law. For instance, in the case of the first contact area 100e1 of the device 100, when in contact with the dielectric host medium 103, the radiation angle of the first jet beam NJ1 associated to the first contact area 100e1 is determined using the approximate formula:

$$\Theta_{B1} \approx \frac{90 - \Theta_{TIR1}}{2}, \qquad (1)$$

where $\Theta_{TIR1} = \sin^{-1}\left(\frac{n_1}{n_2}\right)$ is the corresponding critical angle of refraction under the assumption that $n_2 > n_1$.

It can be noted that in general, the point of intersection of two jet beams radiated from opposite sides of an element determines the focal length of that element behaving as a microlens. In a first approximation, in the case of a single material element the focal length of the microlens can be characterized as the function of the width and index ratio of the materials inside and outside the lens. The radiated electromagnetic beam will be directed along the symmetry axis of the system and the focal length of the resulting microlens can be estimated as:

$$F = \frac{W_1 \gamma}{2}, \qquad (2)$$

where $\gamma = \frac{1}{\tan \Theta_{B1}}$ and $W_1$ is the width of the element in question.

Back to figure 1, the second jet beam NJ2 associated to the second contact area 101e2 is refracted at the angle $\Theta_{B2}$ into the medium with higher refractive index. Assuming $n_2 > n_3$ we determine angle $\Theta_{B2}$ as:

$$\Theta_{B2} \approx \frac{90 - \Theta_{TIR2}}{2}, \qquad (3)$$

where $\Theta_{TIR2} = \sin^{-1}\left(\frac{n_3}{n_2}\right)$ is the corresponding limit angle of refraction.

Accordingly, the third jet beam NJ3 associated to the third contact area 101e3 is refracted at the angle $\Theta_{B3}$ with :

$$\Theta_{B3} \approx \frac{90 - \Theta_{TIR3}}{2}. \qquad (4)$$

$$\Theta_{TIR3} = \sin^{-1}\left(\frac{n_1}{n_3}\right)$$

where $\qquad$ is the corresponding limit angle of refraction.

We note that the length and intensity of the three jet beams NJ1, NJ2 and NJ3, are different. The maximal intensity and minimal length correspond to the beam with highest ratio between the refractive indexes. So, it is the first jet beam NJ1 refracted at the angle $\Theta_{B1}$ when $n_2 > n_3 > n_1$.

To explain the behavior of the focused electromagnetic beam radiated by the device 100, we can determine the points of intersection of the three jet beams NJ1, NJ2 and NJ3 radiated respectively at the angles $\Theta_{B1}$, $\Theta_{B2}$ and $\Theta_{B3}$. The point A of intersection of the first NJ1 and second NJ2 jet beams has the coordinates $(W_A, H_A)$ in the XoZ coordinate system of figure 1. More particularly, based on the previous equations one can get:

$$W_A \approx \tan\Theta_{B2} \cdot H_A,$$
$$H_A \approx \frac{W_1}{\tan\Theta_{B1} + \tan\Theta_{B2}} \qquad (5)$$

Defining $\Theta_{B4}$ as the angle of deviation of the focal point A from the axis of symmetry 101as of the first part 101 with width W1, one can get:

$$\tan\Theta_{B4} \approx \frac{\tan\Theta_{B1} - \tan\Theta_{B2}}{2} \qquad (6)$$

In the same way, the first NJ1 and third NJ3 jet beams intersect at point B with the coordinates $(W_B, H_B)$, where:

$$W_B \approx \tan\Theta_{B3} \cdot H_B - W_2,$$
$$H_B \approx \frac{W_1 + W_2}{\tan\Theta_{B1} + \tan\Theta_{B3}} \qquad (7)$$

Defining $\Theta_{B5}$ as the angle of deviation of the focal point B from the axis of a symmetry of the device 100 (i.e. the Z-axis in figure 1) with width W1+W2, one gets:

$$\tan\Theta_{B5} \approx \frac{W_2 \tan\Theta_{B1} - W_1 \tan\Theta_{B3}}{W_1 + W_2} \qquad (8)$$

We note that the second NJ2 and third NJ3 jet beams intersect only if $n_3$ is above a critical value, i.e. if $n_3 \geq \sqrt{n_1 n_2}$. In this case the coordinates of the point C are determined as:

$$W_C \approx \tan\Theta_{B3} \cdot H_C - W_2,$$
$$H_C \approx \frac{W_2}{\tan\Theta_{B3} - \tan\Theta_{B2}} \qquad (9)$$

In this case, defining $\Theta_{B6}$ as the angle of deviation of the focal point C from the axis of symmetry 102as of the second part 102 with width W2, one gets:

$$\tan\Theta_{B6} \approx \frac{\tan\Theta_{B2} + \tan\Theta_{B3}}{2} \qquad (10)$$

The particular case where the three jet beams NJ1, NJ2 and NJ3 intersect at the same point for fixed refractive indexes of the two parts 101, 102 and of the host medium 103 can be obtained as the result of variation of the widths W1, W2 of the two parts 101, 102. It is obtained that to get an intersection of the three jet beams NJ1, NJ2 and NJ3 at one point the ratio $W_1/W_2$ has to be equal to:

$$\frac{W_1}{W_2} \approx \frac{\tan\Theta_{B1} + \tan\Theta_{B2}}{\tan\Theta_{B3} - \tan\Theta_{B2}} \qquad (11)$$

In this case, all three jet beams NJ1, NJ2 and NJ3 contribute to the total generated focused electromagnetic beam radiated by the device 100. Thus, the intensity of the generated focused electromagnetic beam is maximal.

The dependencies of the deviation angles $\Theta_{B4\text{-}B6}$ on the refractive index $n_3$ for fixed value $n_2$=1.8 and $W_1 = W_2$ are presented in **Figure 2**. For the chosen parameters, the critical value $n_{3cr}$ of refractive index $n_3$ is given by

$n_{3cr} = \sqrt{n_1 n_2} = 1.34$. In that case, the second NJ2 and third NJ3 jet beams intersect when $n_3 > n_{3cr}$. So, until $n_3$ reaches this critical value $n_{3cr}$, the angle $\Theta_{B6}$ has no meaning.

*5.2.2 Parametric study*

Based on the identified properties of the device 100 depicted in figure 1, we review in the following how to adapt the parameters of the device 100 (i.e. the refractive index values, and/or the widths and/or the heights of constitutive first 101 and second 102 parts) in order to obtain a tilt of the generated focused electromagnetic beam (resulting from the combination of at least two beams among the first NJ1, second NJ2 and third NJ3 jet beams) in respect of the direction of propagation of the incoming electromagnetic wave IEM.

*Impact of the heights H1 and H2 of the first 101 and second 102 parts*

The numerical simulations discussed in the sequel have been performed assuming that H1=H2=H, that W1=W2, and that W=W1+W2 is greater than the equivalent wavelength in vacuum, $\lambda$, of the incoming electromagnetic wave IEM (However, as discussed above in relation with figure 1, the technical effects - i.e. having the electromagnetic field lines of the outgoing focused electromagnetic beam presenting a curvature - is achieved even if H1 and H2 are different from each other as long as we have $|H2 - H1| \leq \lambda/4$).

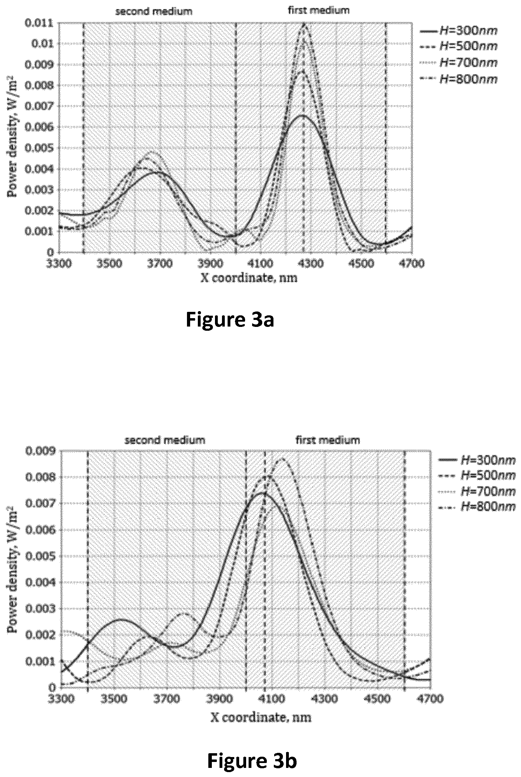

Under the present assumptions, it can be shown that the hot spots positions of the generated jet beams are almost independent on the height H of the device 100 for $n_3 < \sqrt{n_1 n_2}$ as illustrated e.g. in **Figure 3a** for $n_3$= 1.3.

For $n_3 > \sqrt{n_1 n_2}$ and starting from $H1 \approx H_A$ we observe a shift of the hot spot toward increasing X coordinates. The power density distribution along the X-axis for $n_3$= 1.6 is presented in **Figure 3b**. For the parameters of the device 100 chosen for the simulation depicted in figure 3b, we get that $H_A \approx 772$nm.

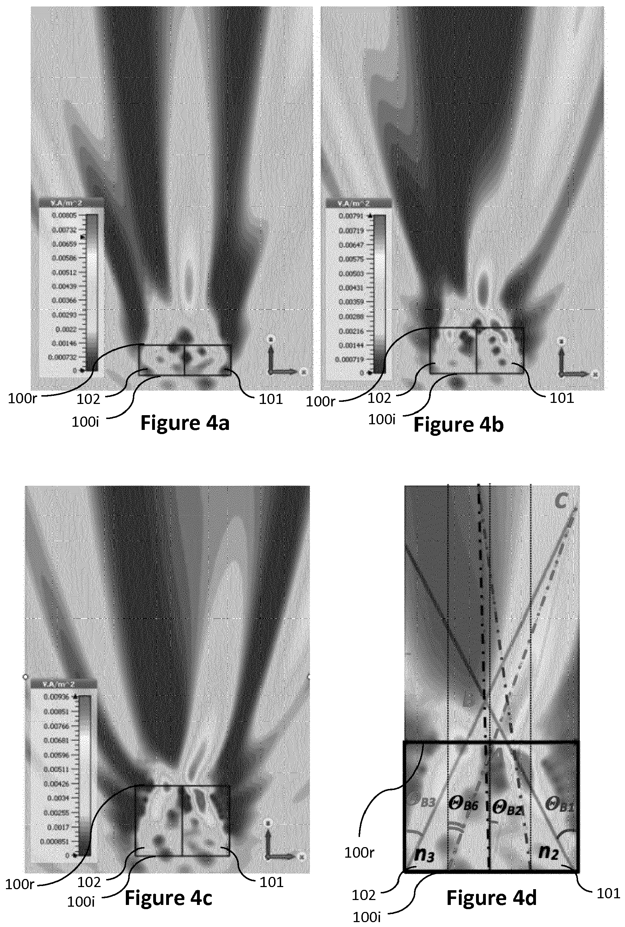

To explain this phenomenon let us consider the power density distribution in the XZ-plane. More particularly, **Figure 4a to 4c** display the power density distribution in the XZ-plane for three different heights H=H1=H2 of the device 100 assuming that $n_3 > \sqrt{n_1 n_2}$. The simulations show that the curvature of the electromagnetic field lines of the outgoing focused electromagnetic beam is achieved by changing the height H of the device 100. **Figure 4d** presents the schematic distribution of the jet beams exited in the system. As a result, the curvature of the electromagnetic field lines of the outgoing focused electromagnetic beam takes place if $H1 \geq H_A$ and if the focal point A for the first NJ1 and the second NJ2 jet beams is close to the radiating surface 100r of the device 100, or even within the device 100 (see Figure 4d). It can be seen, that in this case the curvature of the electromagnetic field lines of the outgoing focused electromagnetic beam is caused by an interplay of the second NJ2 and third NJ3 jet beams, which are longer but less intensive than the first NJ1 jet beam. The angle of deviation of the generated focused electromagnetic beam is close to the angle $\Theta_{B6}$ of deviation of the focal point C from the axis of symmetry 102as of the second part 102 with width W2 (red dash-dot line in Figure 4d).

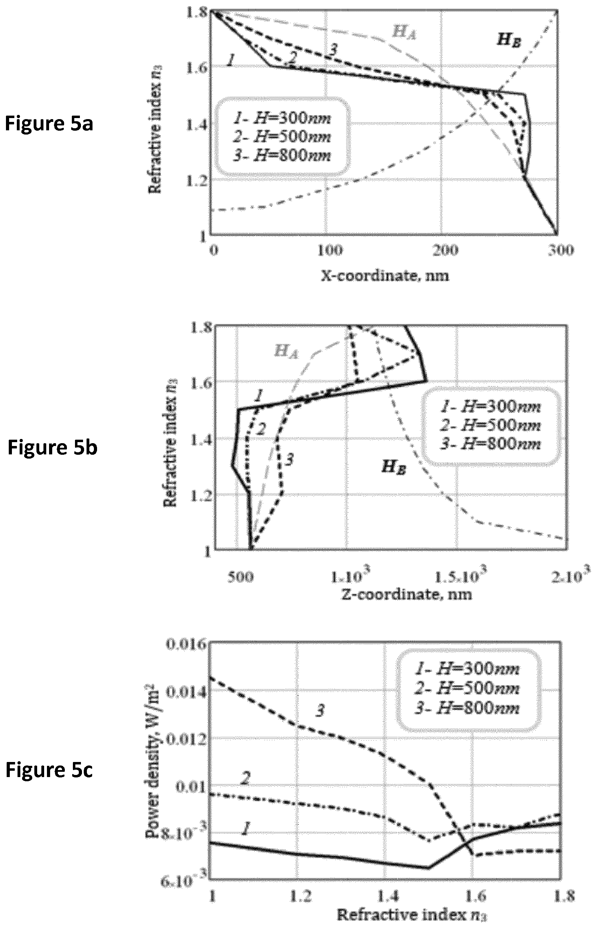

**Figures 5a and 5b** show the dependencies of the hot spots positions of the jet beams generated by the device 100 (along the X and Z axis respectively) on the refractive index $n_3$ for three different heights H=H1=H2 of the system. More particularly, the light gray and the dash-dot lines indicate respectively the dependencies of the X and Z coordinates for points A and B on $n_3$. These two curves are calculated using equations (5) and (7). The power density of the hot spots as a function of $n_3$ is presented in **Figure 5c.**

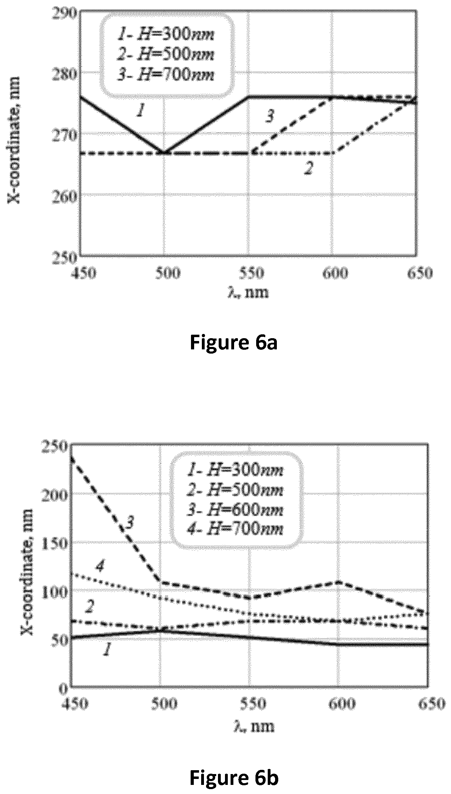

The equivalent wavelength in vacuum $\lambda$ of the incoming electromagnetic wave influences the hot spots positions of the generated jet beams. **Figures 6a and 6b** show the dependency of the hot spots shift on $\lambda$ for different heights H=H1=H2. We note that for $n_3$= 1.3 the shift of the hot spots is almost independent on the wavelength $\lambda$. The influence of the dispersion rises with the refractive index $n_3$ (see Figures 6b for $n_3$= 1.6).

Thus, in some embodiments of the present disclosure, the device 100 is configured such as $n_3 \geq \sqrt{n_1 n_2}$, $W_1 = W_2$ and $H1 \geq H_A$, with $H_A$ the Z coordinate of the intersection point of the first NJ1 and second NJ2 jet beams (i.e. the height, along the Z-axis and relative to the illumination face 100i, of the intersection point of the first NJ1 and second NJ2 jet beams). This allows obtaining a tilt of the direction of the generated focused electromagnetic beam (that results from a combination of at least two beams among the first NJ1, second NJ2 and third NJ3 jet beams) in respect of the direction of propagation of the incoming electromagnetic wave IEM.

*Impact of the widths W1 and W2 of the first 101 and second 102 parts*

We now detail the influence of the width W1 and W2 of the first 101 and second 102 parts of the device 100.

For that, we first analyze the influence of the width W2 of the second part 102, having the refractive index $n_3$, on the parameters of the generated jet beams assuming a fixed width W1 of the first part 101 that has the refractive index $n_2$ ($n_2 > n_3 > n_1$).

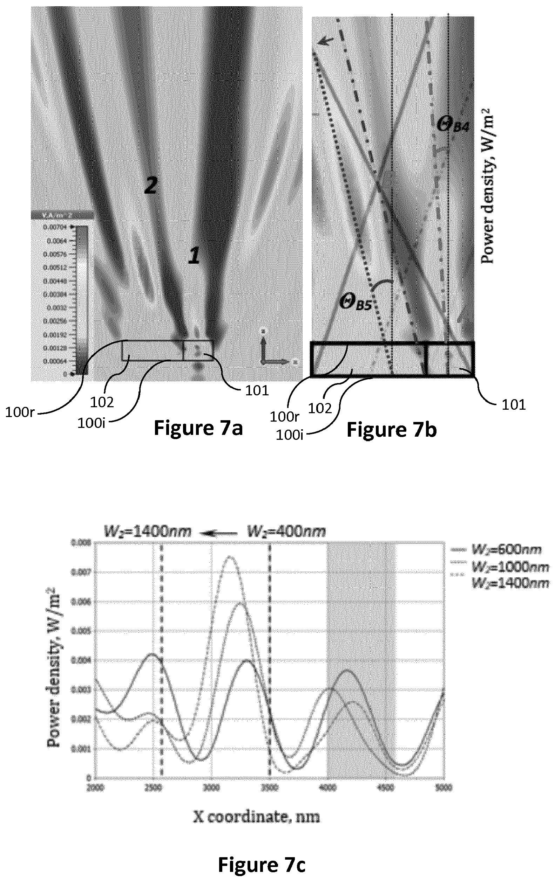

More particularly, for $n_3 < \sqrt{n_1 n_2}$, two jet beams emerge in the proximity of the radiating face 100r of the device 100 when $W_2 > W_1$ as illustrated in **Figure 7a.** We see that the angle of deviation of the first jet beam NJ1 (beam number 1 in Figure 7a) and of the second jet beam NJ2 (beam number 2 in Figure 7a) are equal to $\Theta_{B4}$ and $\Theta_{B5}$ (see **Figure 7b).** Thus, the position and the intensity of the hot spot (i.e. the point of highest intensity in the jet beam) of the second jet beam NJ2 depend on the width $W_2$. The power density distribution along the X-axis at different widths W2 of the second part 102 of the device 100 is presented in **Figure 7c.** We see that the intensity and length of the second jet beam NJ2 rises with $W_2$. We also get that increasing the total width W=W1+W2 of the device 100 increases the input of Fresnel diffraction phenomenon into the total response of the system. So, the number of side jets of second type (or secondary lobes) deviated at an angle $\Theta_{B5}$ that rises as $W_2$ increases.

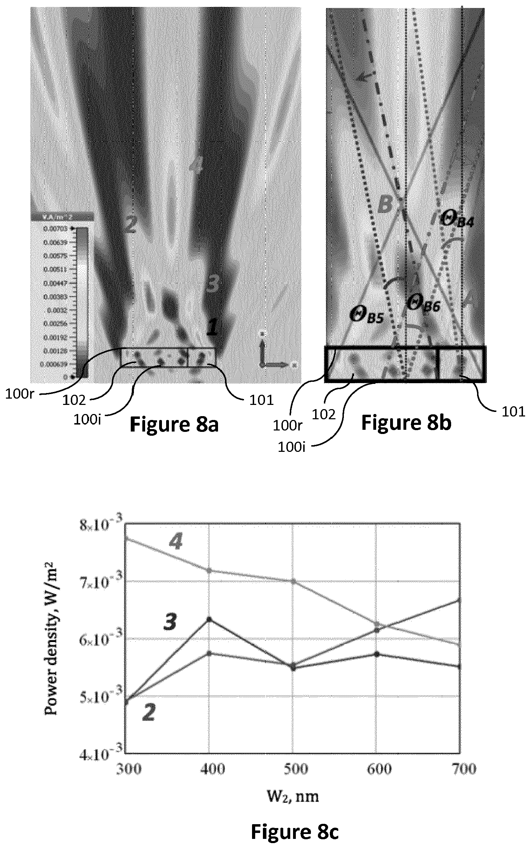

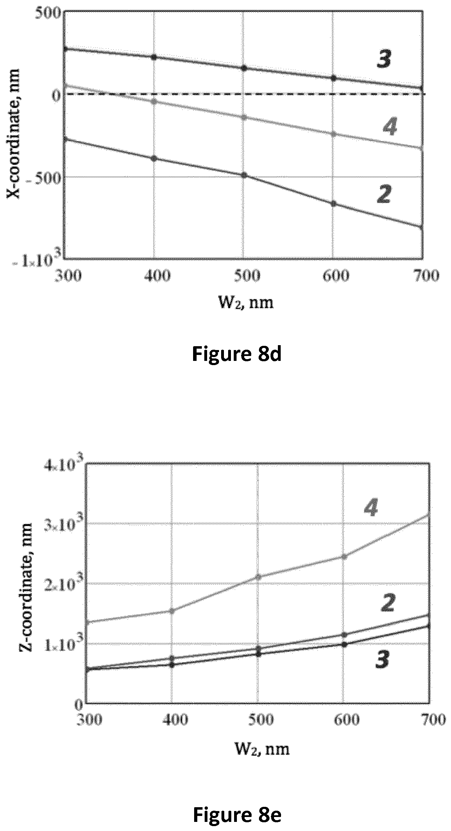

Alternatively, when $n_3 > \sqrt{n_1 n_2}$, we have two additional jet beams (e.g. as in the configuration of **Figure 8a**). The angle of deviation of the third jet beam NJ3 (beam number 3 in Figure 8a) associated to the third contact area 100e3 is equal to $\Theta_{B6}$ (see **Figure 8b**). The central jet beam (beam number 4 in Figure 8a) is directed along the Z-axis (normal to the radiating face 100r of the device). The power density in the hot spots of the jet beams number 2-4 in Figure 8a and the position of the corresponding jet beams' hot spots versus the width $W_2$ of the second part 102 are presented in **Figure 8b to 8e.** As discussed above in the case where $n_3 < \sqrt{n_1 n_2}$, the increase of $W_2$ increases the input of Fresnel diffraction phenomenon into the total response of the system. Consequently, the number of side jets of second type (or secondary lobes) deviated at angles $\Theta_{B5}$ (left side when looking at the figures) and $\Theta_{B6}$ (right side when looking at the figures) increases as $W_2$ increases.

Thus, in some embodiments of the present disclosure, the device 100 is configured such that $n_3 < \sqrt{n_1 n_2}$, and W2>W1, independently of the heights H1 and H2 of the first 101 and second 102 parts of the device 100 (as long as the condition $|H2 - H1| \leq \lambda/4$ is fulfilled). Such parameters allow obtaining a tilt of the direction of the generated focused electromagnetic beam (that results from a combination of at least two beams among the first NJ1, second NJ2 and third NJ3 jet beams) in respect of the direction of propagation of the incoming electromagnetic wave IEM.

Let us now analyze the influence of the width W1 of the first part 101 having the refractive index $n_2$, on the parameters of the generated jet beams assuming a fixed width W2 of the second part 102 that has the refractive index $n_3$ ($n_2 > n_3 > n_1$).

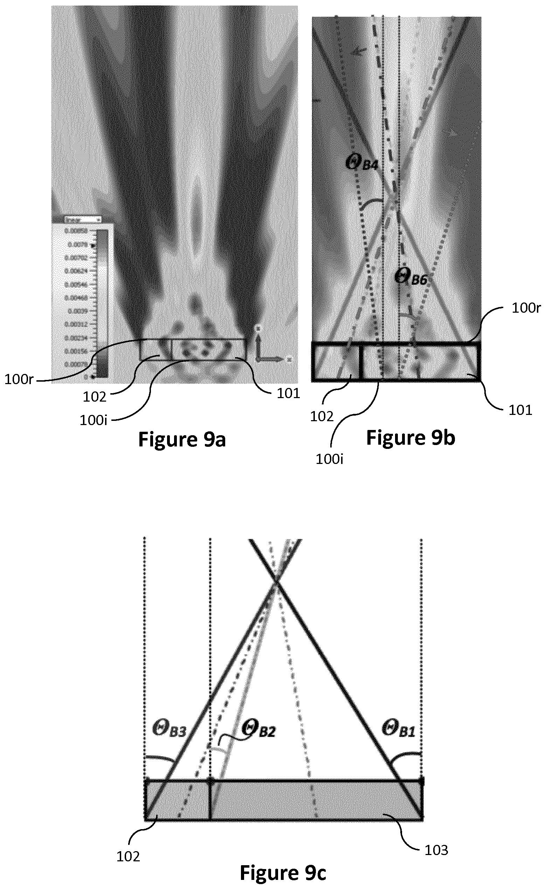

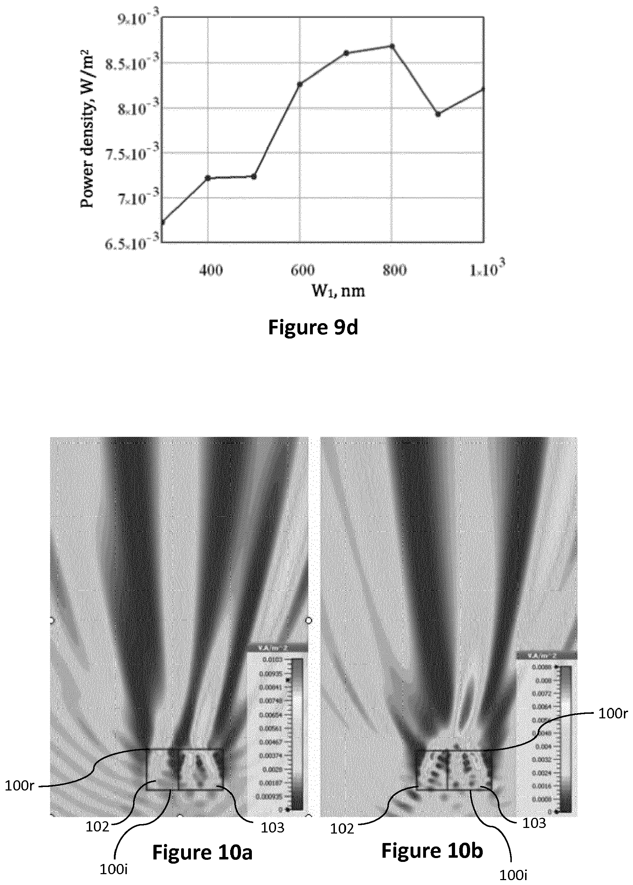

In fact, a similar behavior can be observed as in the previous case discussed above where W2 was varying for a fixed value of W1. However, in the present case the side jet beams (or secondary lobes) are deviated toward the angles $\Theta_{B4}$ (for the side jet beams on the left side when looking at the figures) and $\Theta_{B6}$ (for the side jet beams on the right side when looking at the figures). As mentioned above, in accordance with equation (11) we can intensify the generated focused electromagnetic beam based on some particular dimensions of the device 100. For the values of the parameters of the system as chosen in **figures 9a-d**, the intersection of all the jet beams occurs when $W_1$= 1960nm. In Figure 9d, the maximal intensity of the generated focused electromagnetic beam corresponds to $W_1 \approx 1600$nm. The maximal benefit connected with intersection of all jet beams at the same point will be observed at $W \approx \lambda$, where W=W1+W2.

Thus, in some embodiments of the present disclosure, the device 100 is configured such that $n_3 < \sqrt{n_1 n_2}$, W2<W1, and $H1 \geq H_A$ (still with $|H2 - H1| \leq \lambda/4$). Such parameters allow obtaining a tilt of the direction of the generated focused electromagnetic beam (that results from a combination of at least two beams among the first NJ1, second NJ2 and third NJ3 jet beams) in respect of the direction of propagation of the incoming electromagnetic wave IEM.

We note that with the sizes $W_1 > W_2$, the deviation to the right (when looking at the figures) will be observed for $n_3 < \sqrt{n_1 n_2}$ (e.g. as in the configuration of **Figure 10a**) and even at lower heights H1, H2 of the parts 101, 102 of the device 100 when $n_3 > \sqrt{n_1 n_2}$ as long as $H1 \approx H_A - \lambda/2$, (e.g. as in the configuration of **Figure 10b**). Several factors are responsible for these phenomena. First of all, increasing the width $W_1$ increases the distance $H_A$. Thus, the main contributor to the total focused electromagnetic beam radiated by the device 100 is done by the longer jet beams NJ2 and NJ3 radiated at the angles $\Theta_{B2}$ and $\Theta_{B3}$.

Thus, in some embodiments of the present disclosure, the device 100 is configured such that $n_3 > \sqrt{n_1 n_2}$, W2<W1, and $H1$ is targeted to be equal to $H_A - \lambda/2$ (still with $|H2 - H1| \leq \lambda/4$). Such parameters allow obtaining a tilt of the direction of the generated focused electromagnetic beam (that results from a combination of at least two beams among the first NJ1, second NJ2 and third NJ3 jet beams) in respect of the direction of propagation of the incoming electromagnetic wave IEM.

*Impact of illumination conditions*

Examination of power density distributions obtained for different oblique angles of incidence, $\alpha$, (i.e. the angle of incidence of the incoming electromagnetic wave IEM relative to a normal of the illumination face 100i) shows that the tilt of the direction of the generated focused electromagnetic beam in respect of the normal to the radiating face 100r is sensitive to the height of the device 100.

For example, for a system comprising the device 100 in contact with a dielectric host medium 103 such that $n_1$=1, $n_2$=1.8, $n_3$=1.6, $W_1$=1000nm, $W_2$=700nm, H1=H2=H=300nm and $\alpha$=10°, the tilt angle $\gamma$ of deviation of the generated focused electromagnetic beam from the normal incidence is equal to 14.49° and remains constant for all wavelengths of incident wave in the theoretical hypothesis of non-dispersive materials. The slight dispersion in the case of $\alpha$=10° is observed for H= 550nm. Moreover, the angle $\gamma$ is approximately equal to 17.54°. The dispersion of the system rises with the height H. The comparison of **Figure 11a** and **Figure 11b** shows that for H= 900nm, the dispersion for normal illumination is lower than the dispersion for an oblique one. Moreover, for $\alpha$=10° the angle $\gamma$ of deviation of the generated focused electromagnetic beam changes from $\approx$21° to $\approx$18.9° for 450nm<$\lambda$<650nm. We also notice that for this height H=H1=H2 of the device 100 the additional deviation is approximately equal to the angle of incidence. A similar behavior of the generated focused electromagnetic beam takes place for higher angles of incidence $\alpha$. But in this case the dispersion of deviation will be higher.

One can note that the present simulations have been performed for H=H1=H2, however, as discussed above, the conclusion remains the same as long as we have $|H2 - H1| \leq \lambda/4$.

*Impact of the base angle of the first 101 and second 102 parts*

In this section, we consider the device 100' of **figure 12**, i.e. with nonvertical edges (i.e. edges not parallel to the Z-axis) whereas the radiating 100r and illumination 100i faces both remain orthogonal to the Z-axis. Let us define $\alpha$j (with j equal to 1, 2 or 3) as the base angles for a double-material system. With $\alpha$j different from 90°, the device 100' may correspond to a double-material prismatic device in contact with a dielectric host medium 103, with a refractive index n1 < n3< n2.

It can be shown that for the device 100' with the base angles $\alpha$j > 90°-$\Theta_{Bj}$ (with j equal to 1, 2 or 3) the corresponding jet beam radiation angle can be determined using the approximate formula:

$$\Theta_{Bj} \approx \frac{90^* - \Theta^*_{TIRj}}{2} \qquad (12)$$

where the angles $\theta^*_{TIRj}$ are the critical angles of refraction from the nonvertical edges, or contact areas 100'e1, 100'e2 and 100'e3.

To get the approximate formula for $\theta^*_{TIRj}$ we have to consider the changing of the position of the contact areas compared to the configuration of the device 100 of figure 1. As a result, the corresponding jet beams radiation angle can be estimated as:

$$\Theta_{Bj} \approx 90^* - \frac{\Theta_{TIRj} + \alpha_j}{2} \qquad (13)$$

These expressions can then be injected into the equations (4)-(11) for having a description of the behavior of the jet beams associated to the contact areas 100'e1, 100'e2 and 100'e3 of the device 100'.

To consider the effect of the first 101' and second 102' parts with nonvertical contact areas 100'e1, 100'e2 and 100'e3, simulation results are discussed below that show the influence of the height H1=H2=H of the first 101' and second 102' parts on the generated jet beams when the total width W'=W'1+W'2 is such that W'>λ with W'1=W'2. It is seen that the hot spot position is almost independent on the height H' of the device 100' that is in contact with the dielectric host medium 103 when $n_3 < \sqrt{n_1 n_2}$ (see **Figure 13a** for $n_3$=1.3). For $n_3 > \sqrt{n_1 n_2}$ starting from the specific height H≈HA we observe a deviation of the hot spot to the right (when looking at the figure). The power density distribution along the X-axis for $n_3$=1.6 is presented in **Figure 13b**. For the parameters of the device 100' and of the dielectric host medium 103 chosen in those figures 13a and 13b, we get that $H_A$≈718.96 nm.

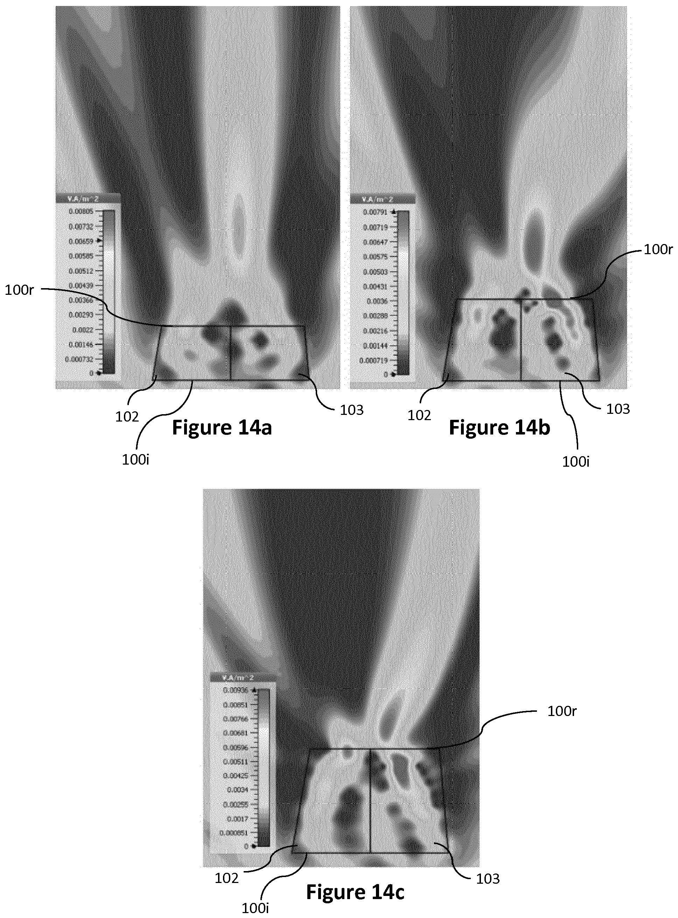

To explain a last phenomenon observed in **Figure 14a to 14c** we present the power density distribution in the XZ-plane for 3 different heights H'=H'1=H'2 of the device 100' with $n_3 > \sqrt{n_1 n_2}$. The numerical studies show that for the device 100' with nonvertical contact areas 100'e1, 100'e2 and 100'e3, the deviation of the generated focused electromagnetic beam can also be achieved by changing the height H'=H'1=H'2 of the device 100'.

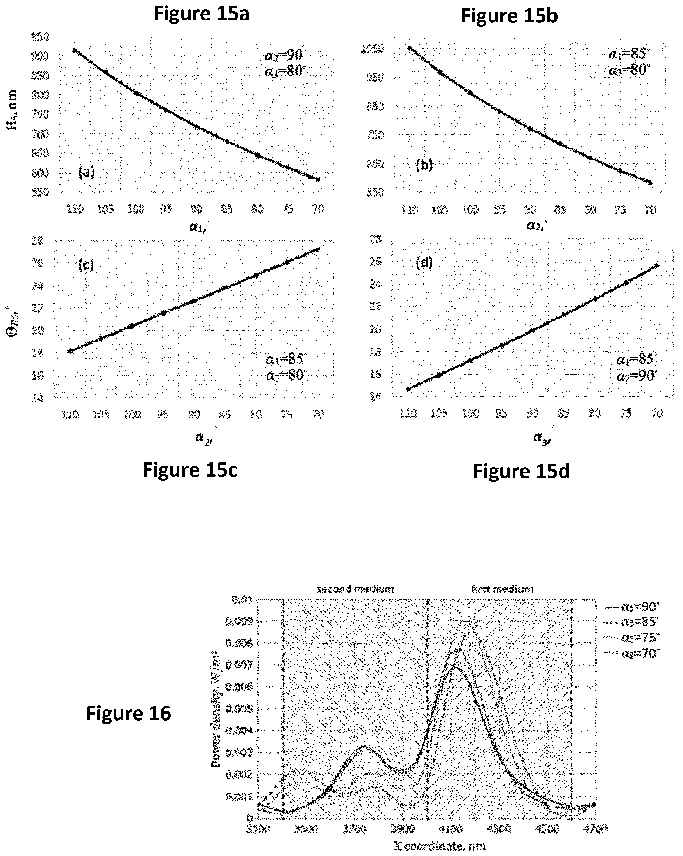

More particularly, **Figures 15a to 15d** give the height $H_A$ and the deviation angle $\Theta_{B6}$ as obtained based on equations (5) and (10). In Figure 15a we see that varying the angle $\alpha_1$ at fixed angles $\alpha_2$ and $\alpha_3$ affects only the specific height $H_A$ without changing the angle $\Theta_{B6}$ (for the parameters chosen for the simulation plotted in Figure 15a, we get that $\Theta_{B6}$=22°). Conversely, decreasing or increasing the base angle $\alpha_2$ leads to the changing of both parameters $H_A$ and $\Theta_{B6}$ as can be seen in Figure 15b and 15c. We see that for the minimal angle $\alpha_2$ we obtain a maximal deviation of the corresponding jet beam at minimal height H'=H'1=H'2 of the device 100'.

As can be seen in Figure 15d, changing the base angle $\alpha_3$ does not only affect the specific height $H_A$ (for the parameters chosen for the simulation plotted in Figure 15d $H_A$=718.96nm), but we also get that the maximal deviation is observed for the minimal angle $\alpha_3$. Figure 16 gives the power density distribution along the X-axis in the cut-plane $Z_0$=1000nm for four different values of the angle $\alpha_3$, with λ=550nm, with $\alpha_1$=85°, $\alpha_2$=90° and with the device 100' having H'=H'1=H'2 greater than $H_A$.

### 5.3 Optical manipulation apparatus

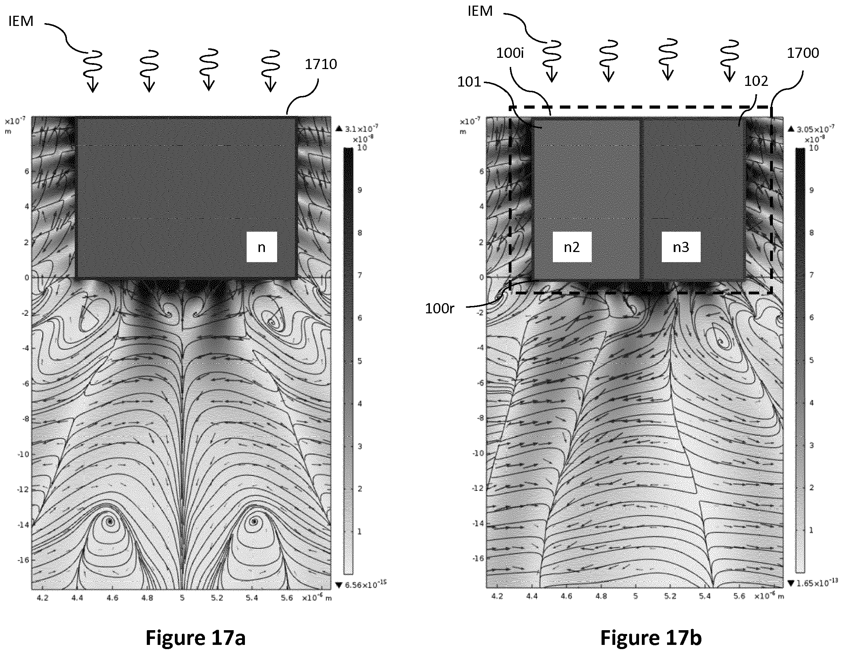

We now describe in relation with **figures 17a to 19d** the possibility of subwavelength optical manipulation of micro- or nano-particles by the curved jet beams generated by a device (e.g. device 100 or 100') according to the disclosure.

More particularly, the optical forces acting on an arbitrary micro- or nano-particles can be calculated in an approximation of the particle by an electric dipole; this method applies for Rayleigh particles (particle much smaller than the incident wavelength) as detailed for instance in the article by P. Chaumet and M. Nieto-Vesperinas: "Time-averaged total force on a dipolar sphere in an electromagnetic field," Opt. Lett. 25, 1065-1067 (2000). Using the dipole approximation for the subwavelength radius of the sphere the force can be obtained as:

$$\mathbf{F} = \frac{1}{2}\mathrm{Re}(\chi)\sum_i \mathrm{Re}\left(\mathbf{E}_i \cdot \nabla \mathbf{E}_i^*\right) + \frac{1}{2}\mathrm{Im}(\chi)\sum_i \mathrm{Im}\left(\mathbf{E}_i \cdot \nabla \mathbf{E}_i^*\right), \qquad (14)$$

$$\chi = \pi n_m^2 a^3 \frac{m^2 - 1}{m^2 + 2} \qquad\qquad m = \frac{n_p}{n_m},$$

where $\chi = \pi n_m^2 a^3 \frac{m^2 - 1}{m^2 + 2}$ is the particle's complex polarizability, $m = \frac{n_p}{n_m}$, $n_p$ is the refractive index of the material of the particle, $n_m$ is the refractive index of the medium outside the particle and $a$ is the radius of the particle.

The forces produced by the deviated jet beams in the presence or not of obstacles 1800 have been simulated using Comsol software and based on the dipolar approximation for gold particles with a radius of $0.03\mu m$ and a dielectric permittivity $\varepsilon$ = - 11.208+1.31184i. Further, those forces have been simulated on one hand for a single material device 1710 having a refractive index n, and for the dual-material device 100 of figure 1.

In figures 17a and 17b, the devices are illuminated by a TM (for "Transverse magnetic") polarized incoming electromagnetic wave IEM with $\lambda$=550nm and $\alpha$=0° (i.e. the incoming electromagnetic wave IEM has a direction of propagation orthogonal to the illumination face 100i of the device 100). The single material device 1710 is made of the same material as the first part 101 of the device 100, i.e. n=$n_1$=$n_2$. Further the single material device 1710 has the same width W as the device 100, with W=W1+W2=2*600nm ($W_1$=$W_2$), and the same height H=H1=H2=900nm. The streamlines and arrows show the trajectories and directions of the optical forces obtained using the dipolar approximation. It is possible to see that in a case of double material device 100 we can transport the particles along the curved trajectory.

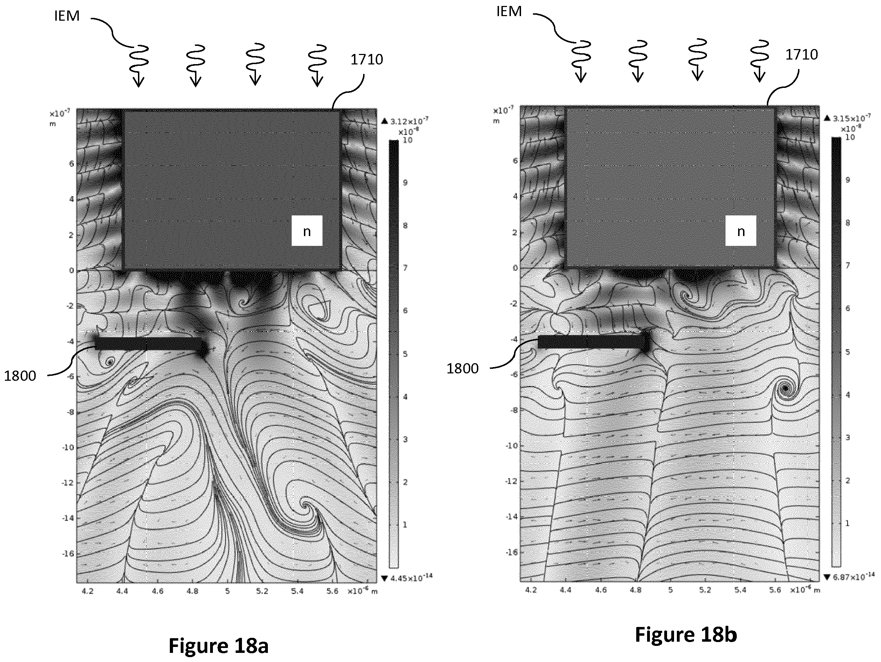

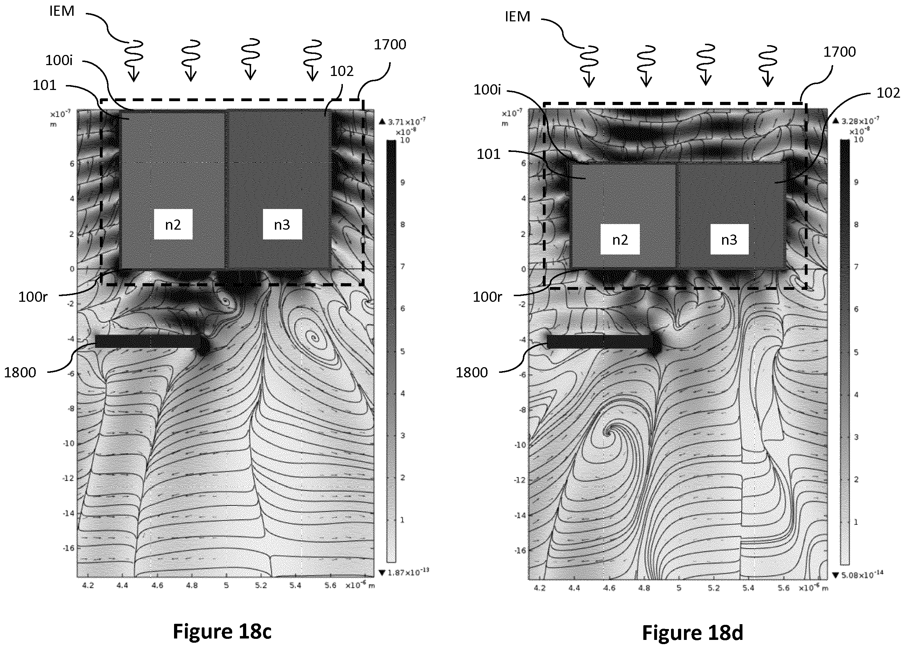

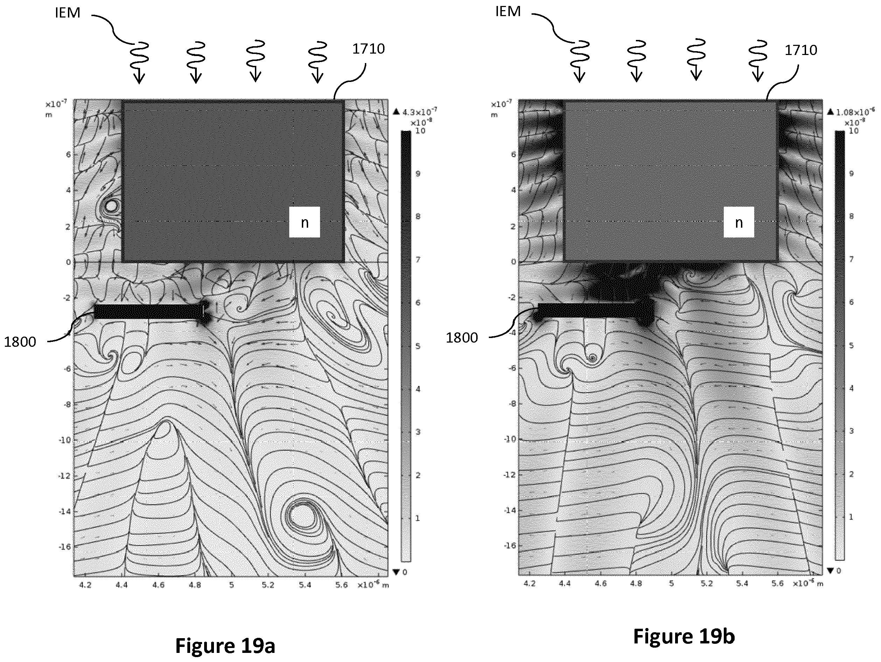

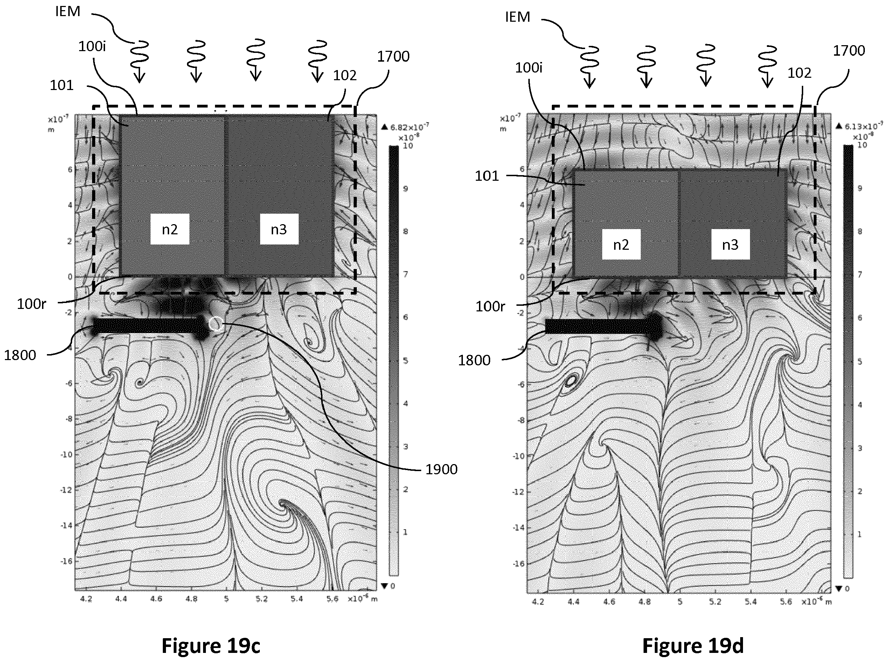

Referring to figures 18a to 19d, we describe the changing of the fields in a case when the obstacles 1800 are placed along the jet beams paths. The length of the obstacle 1800 in X-direction coincide with the width W1 of the first part 101 of the device 100. However, the obstacle 1800 is shifted between the axis of symmetry of the obstacle 1800 and the axis of symmetry the first part 101 by an offset equal to $W_1$/4. The same configuration is used for the single material device 1710. The simulations correspond to an obstacle 1800 made of glass with a refractive index 1.8 and a thickness equal to $\lambda$/8 placed at the distance 5$\lambda$/8 in the case of Figures 18a to 18d, and made of metal (perfect electric conductor) with the same thickness $\lambda$/8 placed at the distance 3$\lambda$/8 in the case of Figures 19a to 19d. We see that the presence of the obstacle 1800 leads to the disruption of the jet beams and to valuable changing in the trajectory. Increasing the refractive index of the single material device 1710, we get the curved trajectory but the forces pushing the particle away from the system are very small. Only the double-material device 100 (here with the height H=H1=H2=900nm) can generate the deviated jet beam. In that case, the particles can move along the curved trajectory around the obstacle. This effect was obtained for both type of obstacles 1800 (i.e. glass and metal). Moreover, in a case of conducting obstacles 1800 we can get trapping locations near the obstacle (white circle referred 1900 in Figure 19c).

Thus, such double-material device 100, 100' according to the disclosure (in any of its embodiment discussed above) can be used as an elementary part of an optical manipulation apparatus (e.g. an optical tweezer) 1700 for trapping or moving micro or nanoparticles in the dielectric host medium 103. For instance, the equivalent wavelength in vacuum, $\lambda$, of the incoming electromagnetic wave IEM belongs to the visible light spectrum (e.g. to the range going from 390nm to 700nm).

In some embodiments, such optical manipulation apparatus 1700 can also comprise an optical source for radiating the incoming electromagnetic wave IEM that illuminates the illumination face 100i of the device 100, 100' (in any of its embodiments discussed above). In that case, the optical manipulation apparatus 1700 can generate the tilted focused electromagnetic beam independently of the use of an external source for generating the incoming electromagnetic wave IEM.

**Claims**

1. Optical manipulation apparatus for trapping or moving micro or nanoparticles, **characterized in that** it comprises a device intended to be in contact with a dielectric host medium having a first refractive index $n_1$ and in which said micro- or nano-particles are trapped or moved by a focused electromagnetic beam radiated by said device when an incoming electromagnetic wave illuminates at least one face of said device, named illumination face, said device comprising at least:

   - a first part of a first material having a second refractive index $n_2$ and having a first width $W_1$ along a direction of extension of said illumination face, named X-axis; and
   - a second part of a second material having a third refractive index $n_3$, with n1<n3<n2, and having a second width $W_2$ along said X-axis,

   said first and second parts being located side by side along said X-axis with $W_1$ + $W_2$ greater than an equivalent wavelength in vacuum, named $\lambda$, of said incoming electromagnetic wave, each of said first and second parts extending along a direction orthogonal to said illumination face, named Z-axis, from said illumination face up to another face of said device, named radiating face, opposite to said illumination face, said first and second parts having respectively a first height H1 and a second height H2 along said Z-axis fulfilling $|H2 - H1| \leq \lambda/4$,
said device further comprising:

- a first contact area intended to be between said host medium and said first part, said first contact area contributing to the radiation of a first jet beam in a near field zone when said incoming electromagnetic wave illuminates at least said illumination face;
- a second contact area between said first part and said second part, said second contact area contributing to the radiation of a second jet beam in said near field zone when said incoming electromagnetic wave illuminates at least said illumination face; and
- a third contact area intended to be between said second part and said host medium, said third contact area contributing to the radiation of a third jet beam in said near field zone when said incoming electromagnetic wave illuminates at least said illumination face,

said focused electromagnetic beam resulting from a combination of at least two beams among said first, second and third jet beams, said device being configured for having a direction of propagation of said focused electromagnetic beam being tilted in respect of a direction of propagation of said incoming electromagnetic wave as a function of at least part of:

- said first $n_1$, second $n_2$ and third $n_3$ refractive indexes;
- said first $W_1$ and second $W_2$ widths; and
- said first H1 and second H2 heights.

2. Optical manipulation apparatus according to claim 1 wherein $n_3 \geq \sqrt{n_1 n_2}$, wherein $W_1 = W_2$ and wherein $H1 \geq H_A$, with $H_A$ a height, along said Z-axis and relative to said illumination face, of the intersection point of said first and second jet beams.

3. Optical manipulation apparatus according to claim 1 wherein $n_3 < \sqrt{n_1 n_2}$ and wherein $W_2 > W_1$.

4. Optical manipulation apparatus according to claim 1 wherein $n_3 < \sqrt{n_1 n_2}$, wherein $W_2 < W_1$ and wherein $H1 \geq H_A$, with $H_A$ the height, along said Z-axis and relative to said illumination face, of an intersection point of said first and second jet beams.

5. Optical manipulation apparatus according to claim 1 wherein $n_3 > \sqrt{n_1 n_2}$, wherein $W_2 < W_1$ and wherein $H1$ is targeted to be equal to $H_A - \lambda/2$, with $H_A$ the height, along said Z-axis and relative to said illumination face, of an intersection point of said first and second jet beams.

6. Optical manipulation apparatus according to any of the claims 2 to 5 wherein said height $H_A$ fulfils

$$H_A = \frac{W_1}{\tan \Theta_{B1} + \tan \Theta_{B2}},$$ $\Theta_{B1}$ and $\Theta_{B2}$ being respectively radiation tilt angles of said first and second jet beams in respect of said direction of propagation of said incoming electromagnetic wave.

7. Optical manipulation apparatus according to claim 6 wherein $\Theta_{B1}$ and $\Theta_{B2}$ are targeted to be respectively equal to $90° - \frac{\Theta_{TIR1} + \alpha_1}{2}$ and to $90° - \frac{\Theta_{TIR2} + \alpha_2}{2}$, where angles $\alpha_1$ and $\alpha_2$ are respectively the base angles of said first and second contact areas relative to said X-axis, and where $\Theta_{TIR1}$ and $\Theta_{TIR2}$ are respectively limit angles of refraction associated with said first and third contact areas.

8. Optical manipulation apparatus according to claim 7 wherein $\Theta_{TIR1} = \sin^{-1}\left(\frac{n_1}{n_2}\right)$ and $\Theta_{TIR2} = \sin^{-1}\left(\frac{n_3}{n_2}\right)$.

9. Optical manipulation apparatus according to any of the claims 1 to 8 wherein said equivalent wavelength in vacuum, $\lambda$, of said incoming electromagnetic wave belongs to the visible light spectrum.

10. Optical manipulation apparatus according to any of the claims 1 to 9 wherein at least one of said first and second materials belongs to the group comprising:

- glass;
- plastic;
- a polymer material;
- oxides; and
- nitrides.

Figure 1

Figure 2

**Figure 3a**

**Figure 3b**

Figure 4a

Figure 4b

Figure 4c

Figure 4d

**Figure 5a**

**Figure 5b**

**Figure 5c**

**Figure 6a**

**Figure 6b**

**Figure 7a**

**Figure 7b**

**Figure 7c**

**Figure 8a**

**Figure 8b**

**Figure 8c**

**Figure 8d**

**Figure 8e**

100r

102        101

100i

**Figure 9a**

$\Theta_{B4}$

$\Theta_{B6}$

100r

102       101

100i

**Figure 9b**

$\Theta_{B3}$    $\Theta_{B2}$      $\Theta_{B1}$

102          103

**Figure 9c**

Figure 9d

**Figure 10a**

**Figure 10b**

**Figure 11a**

**Figure 11b**

**Figure 12**

**Figure 13a**

**Figure 13b**

Figure 14a

Figure 14b

Figure 14c

EP 3 671 310 A1

**Figure 15a**

**Figure 15b**

**Figure 15c**

**Figure 15d**

**Figure 16**

29

**Figure 17a**

**Figure 17b**

Figure 18b

Figure 18a

EP 3 671 310 A1

**Figure 18c**

**Figure 18d**

**Figure 19a**

**Figure 19b**

EP 3 671 310 A1

**Figure 19c**

**Figure 19d**

# EP 3 671 310 A1

Europäisches
Patentamt

European
Patent Office

Office européen
des brevets

**EUROPEAN SEARCH REPORT**

Application Number

EP 18 21 3584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 312 674 A1 (THOMSON LICENSING [FR]) 25 April 2018 (2018-04-25) * abstract; figures 31,34,36,43, 44 * | 1-10 | INV. G02B21/32 G02B6/32 |
| X | EP 3 385 219 A1 (THOMSON LICENSING [FR]) 10 October 2018 (2018-10-10) * abstract * * figures 15,16,23,25,34,37-40 * | 1-10 | |
| X | US 3 718 383 A (MOORE R) 27 February 1973 (1973-02-27) * figures 7,8 * * column 1 - column 5 * | 1 | |
| A | CHEN XU ET AL: "Photon nanojet lens: design, fabrication and characterization", NANOTECHNOLOGY, IOP, BRISTOL, GB, vol. 27, no. 16, 4 March 2016 (2016-03-04) , page 165302, XP020303438, ISSN: 0957-4484, DOI: 10.1088/0957-4484/27/16/165302 [retrieved on 2016-03-04] * the whole document * | 1-10 | TECHNICAL FIELDS SEARCHED (IPC) G02B |
| A | LIYANG YUE ET AL: "Photonic hook: a new curved light beam", OPTICS LETTERS, vol. 43, no. 4, 15 February 2018 (2018-02-15), page 771, XP055457895, US ISSN: 0146-9592, DOI: 10.1364/OL.43.000771 * the whole document * | 1-10 | |

-/--

The present search report has been drawn up for all claims

| Place of search | Date of completion of the search | Examiner |
|---|---|---|
| Munich | 25 June 2019 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 21 3584

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | ANGELEENE S. ANG ET AL: "'Photonic Hook' based optomechanical nanoparticle manipulator", SCIENTIFIC REPORTS, vol. 8, no. 1, 1 February 2018 (2018-02-01), XP055565926, DOI: 10.1038/s41598-018-20224-4 * the whole document * | 1-10 | |

-----

TECHNICAL FIELDS
SEARCHED      (IPC)

The present search report has been drawn up for all claims

| Place of search | Date of completion of the search | Examiner |
|---|---|---|
| Munich | 25 June 2019 | Windecker, Robert |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 18 21 3584

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2019

| Patent document cited in search report | | | Publication date | Patent family member(s) | | | Publication date |
|---|---|---|---|---|---|---|---|
| EP | 3312674 | A1 | 25-04-2018 | EP | 3312674 | A1 | 25-04-2018 |
| | | | | WO | 2018073427 | A1 | 26-04-2018 |
| EP | 3385219 | A1 | 10-10-2018 | EP | 3385219 | A1 | 10-10-2018 |
| | | | | US | 2018354844 | A1 | 13-12-2018 |
| US | 3718383 | A | 27-02-1973 | BE | 782159 | A | 31-07-1972 |
| | | | | CA | 964505 | A | 18-03-1975 |
| | | | | DE | 2218782 | A1 | 02-11-1972 |
| | | | | FR | 2133709 | A1 | 01-12-1972 |
| | | | | GB | 1362757 | A | 07-08-1974 |
| | | | | JP | S5518882 | B1 | 22-05-1980 |
| | | | | NL | 7205284 | A | 23-10-1972 |
| | | | | US | 3718383 | A | 27-02-1973 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3223063 A

**Non-patent literature cited in the description**

- **A. S. ANG ; A. KARABCHEVSKY ; I. V. MININ ; O. V. MININ ; S. V. SUKHOV ; A. S. SHALIN.** Photonic Hook' based optomechanical nanoparticle manipulator. *Scient. Rep.,* 2018

- **P. CHAUMET ; M. NIETO-VESPERINAS.** Time-averaged total force on a dipolar sphere in an electromagnetic field. *Opt. Lett.,* 2000, vol. 25, 1065-1067